# EUROPÄISCHE PATENTSCHRIFT

(11) **EP 0 773 144 B1**
(45) Veröffentlichungstag und Bekanntmachung des Hinweises auf die Patenterteilung: **29.03.2000**
(21) Anmeldenummer: 96117074.3
(22) Anmeldetag: 24.10.1996
(51) Int. Cl.: B60R 21/22

(54) **Gassack für ein Fahrzeuginsassen-Rückhaltesystem**
Air bag for a vehicle occupant restraint system
Sac gonflable pour un système de retenue des passagers d'un véhicule

(30) Priorität: 13.11.1995 DE 29517951 U
(43) Veröffentlichungstag der Anmeldung: 14.05.1997
(73) Patentinhaber: TRW Occupant Restraint Systems GmbH & Co. KG, 73551 Alfdorf (DE)
(72) Erfinder: Richter, Thomas, 73529 Schwäbisch Gmünd (DE); Acker, Dominique, 73553 Alfdorf (DE)
(74) Vertreter: Degwert, Hartmut, Dipl.-Phys.

(56) Entgegenhaltungen:
- DE-A- 4 405 927
- GB-A- 2 283 463
- PATENT ABSTRACTS OF JAPAN vol. 017, no. 697 (M-1532), 20.Dezember 1993 & JP 05 238347 A (IKEDA BUSSAN CO LTD), 17.September 1993,

## Beschreibung

Die Erfindung betrifft einen Gassack für ein Fahrzeuginsassen-Rückhaltesystem, mit einer flexiblen Wandung, die die Seiten des Gassacks definiert.

Bei bisherigen Gassäcken, die eine unsymmetrische Form aufweisen, um optimal auf die Position eines Fahrzeuginsassen abgestimmt zu werden, wird diese unsymmetrische Form üblicherweise dadurch erzeugt, daß zwei unsymmetrische Seitenteile durch ein Mantelteil miteinander verbunden werden. Eine derartige Konstruktion eines Gassacks hat den Nachteil, daß nur Krümmungen des Gassacks bis zu bestimmten Obergrenzen erreicht werden können, da ansonsten, z.B. bei einem bogenförmigen Gassack, die Mantelfläche auf einer zu erzeugenden konkaven Seite ausbauchen und die konkave Krüm-mung verringern würde.

Muß aufgrund einer besonderen Gassackposition im Fahrzeug ein Gassack eine Form mit stark gekrümmten Flächen aufweisen, so gibt es weiter die Möglichkeit, den Gassack aus zahlreichen entsprechend zugeschnittenen Gassackeinzelteilen zusammenzufügen, was jedoch aufwendig ist.

Aus der GB-A-2 283 463 ist ein Gassack bekannt, der Ausströmöffnungen aufweist. Diese Ausströmöffnungen sind im noch nicht aufgeblasenen und teilweise aufgeblasenen Zustand aber durch eine Reißnaht geschlossen, die eine in das Innere sich erstreckende Falte bildet. Ab Erreichen eines bestimmten Gassackinnendrucks wird die Reißnaht zerstört und die Ausströmöffnungen freigelegt, so daß Gas nach außen strömt. Dieser Stand der Technik zeigt einen Gassack, der im voll entfalteten Zustand eine symmetrische Form hat.

Aufgabe der Erfindung ist es, einen Gassack zu schaffen, bei dem auf einfache Weise eine unsymmetrische Gassackform erzeugbar ist, so daß mehr Möglichkeiten für die Gassackpositionierung im Fahrzeug gegeben sind.

Die Aufgabe wird bei einem gattungsgemäßen Gassack dadurch gelöst, daß der Gassack in vollständig aufgeblasenem Zustand wenigstens eine Falte aufweist, die durch dauerhaft verbundene, angrenzende Abschnitte der Wandung gebildet ist, und daß wenigstens eine Naht zur Verbindung der Abschnitte vorgesehen ist, die die flexible Wandung auf einer Seite verkürzt und die geometrische Form des Gassacks gegenüber einem entsprechend gestalteten Gassack ohne Naht ändert. Die Falte beim erfindungsgemäßen Gassack ist an dessen Außenseite vorgesehen.

Der erfindungsgemäße Gassack ist dadurch sehr einfach herstellbar, ohne daß zusätzliche Gewebelagen oder speziell zugeschnittene Teile benötigt werden. Durch die Naht werden einfach Abschnitte des Gassacks miteinander vernäht, so daß sich eine entsprechende Verkürzung des Gassacks in diesem Bereich ergibt, die zu einer Veränderung der Oberflächenkrümmung des Gassacks wenigstens in diesem Bereich führt. Einem Gassack kann damit durch Vorsehen von einer oder mehreren Nähten eine annähernd beliebige gewünschte Form gegeben werden, so daß er dem zur Verfügung stehenden Raum im Fahrzeug anpaßbar ist. Damit ist es möglich, trotz einer gleichen Grundform des Gassacks, d.h. bei gleichen Zuschnitten der Gassackeinzelteile, durch unterschiedlich angeordnete Nähte verschiedene Gassackformen herzustellen, was die Gassackherstellung vereinfacht, da weniger unterschiedliche Teile benötigt werden. Der erfindungsgemäße Gassack kann auch an entfernteren Positionen im Fahrzeug angeordnet sein, da er stark gekrümmte Formen aufweisen kann, wodurch sich die Möglichkeiten für die Anordnung eines Gassacks im Fahrzeug erhöhen. Im Versuch hat sich eine gute Reproduzierbarkeit der Gassackform bei unterschiedlichen Gassackpositionen im Fahrzeug ergeben. Dadurch, daß sich die Falte an der Außenseite des Gassacks erstreckt, kann die Naht einfach, ohne Umstülpen des Gassacks von der Außenseite hergestellt werden.

Im Gegensatz zu bereits bekannten Reißnähten, die während des Aufblasvorgangs die Ausdehnungsrichtung eines Gassacks steuern, ist die beim erfindungsgemäßen Gassack vorgesehene Naht auch in vollständig aufgeblasenem Zustand des Gassacks vorhanden und verbindet Abschnitte des Gassacks dauerhaft miteinander, unabhängig von der Temperatur im Gassack.

Darüber hinaus ist es natürlich auch denkbar, daß beim erfindungsgemäßen Gassack zusätzlich Reißnähte vorgesehen sind, die die Ausdehnungsrichtung des Gassackes beim Aufblasen steuern.

Es werden weiter auch keine speziellen Gewebearten für das Gassackmaterial benötigt, denn die Naht ist bei sämtlichen Gewebearten verwendbar.

Vorzugsweise erstreckt sich die für die Bildung der zusätzlichen Falte vorgesehene Naht in Richtung des Verlaufs der Falte.

Gemäß einer vorteilhaften Ausführungsform ist die Naht als verriegelte Steppnaht und/oder Kettnaht ausgebildet. Die Nahtart sowie die Anzahl der Nähte selbst kann je nach Anwendungsfall variiert werden, ebenso wie die Länge, die Lage oder die geometrische Form der Naht.

Gemäß einer bevorzugten Ausführungsform besteht der erfindungsgemäße Gassack aus zwei oder mehr Gewebeteilen, wobei an einem Gewebeteil wenigstens eine Naht vorgesehen ist, die die Wand dieses Gewebeteils verkürzt und damit dem Gassack eine Bogenform verleihen kann. Dieser Aufbau ist besonders bei Vorsehen von nur zwei Gewebeteilen einfach und billig.

Bei einer Verwendung des erfindungsgemäßen Gassacks als Seitenaufprall-Schutzeinrichtung ist gemäß einer bevorzugten Ausführungsform zumindest eine Naht an einer dem Fahrzeuginnenraum zugewandten Seite des Gassackes so angeordnet, daß der Gassack, in Fahrzeuglängsrichtung gesehen, eine konkave Innenseite und eine konvexe Außenseite hat. Der Gassack umgibt damit den Kopf- und Thorax-Bereich eines Fahrzeuginsassen bogenförmig, so daß der Abstand des Kopfes eines Fahrzeuginsassen zum aufgeblasenen Gassack verringert wird und sich niedrigere Beschleunigungswerte erzielen lassen. Zudem ist der Gassack der heutzutage üblichen bogenförmigen Fahrzeugseitenform anpaßbar, so daß trotz dieser Fahrzeugform relativ großvolumige Gassäcke einsetzbar sind, indem der Gassack im Kollisionsfall nicht versuchen wird, aus dem Fahrzeuginnenraum auszutreten.

Weitere Merkmale und Vorteile der Erfindung ergeben sich aus der nachfolgenden Beschreibung und aus den nachfolgenden Zeichnungen, auf die Bezug genommen wird. In der Zeichnung zeigen:
Fig. 1a eine perspektivische Ansicht eines erfindungsgemäßen Gassacks in aufgeblasenem Zustand, der als Seitenaufprall-Schutzeinrichtung ausgebildet ist;
Fig. 1b eine Frontansicht des Gassacks nach Fig. 1a;
Fig. 2a eine perspektivische Ansicht des dem Fig. 1 entsprechenden Gassacks ohne Naht zur Verkürzung einer Wandung in aufgeblasenem Zustand;
Fig. 2b eine Frontansicht des Gassacks gemäß Fig. 2a;
Fig. 3 eine weitere Ausführungsform des erfindungsgemäßen Gassacks als Seitenaufprall-Schutzeinrichtung im Vordersitzbereich;
Fig. 4 eine perspektivische Schnittansicht einer weiteren Ausführungsform eines erfindungsgemäßen Gassacks, sowie einen mit strichpunktierten Linien angedeuteten entsprechenden Gassack ohne Naht; und
Fig. 5 eine vergrößerte Ansicht der in den Figuren 3 und 4 mit X gekennzeichneten Einzelheiten, die eine Naht in Seitenansicht darstellt.

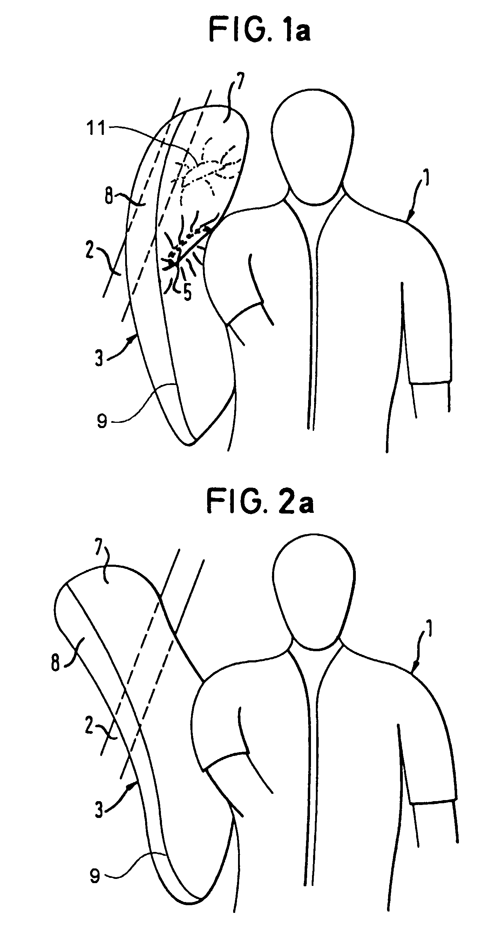

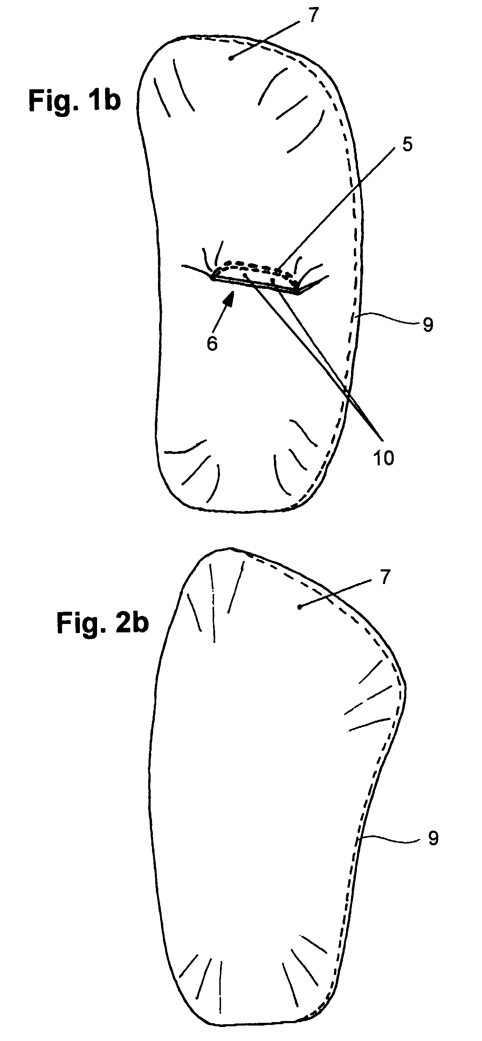

In Fig. 1a ist ein Fahrzeuginsasse 1 gezeigt, der durch einen Gassack 3 als Seitenaufprall-Schutzeinrichtung in einem Kollisionsfall geschützt wird. Der in den Fign. 1a und 1b dargestellte aufgeblasene Gassack zeigt diesen zum Zeitpunkt t = 30 ms nach einem Kollisionsfall. Mit dem Bezugszeichen 2 ist die angedeutete Fahrzeug-B-Säule bezeichnet. Der Gassack 3 besteht aus einer flexiblen Wandung in Form von zwei Gewebeteilen, nämlich einem dem Fahrzeuginnenraum zugewandten Gewebeteil 7, das die Innenseite des Gassacks 3 bildet, und einem dem Fahrzeugäußeren zugewandten Gewebeteil 8, die die Außenseite des Gassacks 3 bildet. Beide Teile 7, 8 sind an ihren Umfangsrändern 9 miteinander vernäht. Horizontal und annähernd über die Hälfte der Breite des Gewebeteils 7 erstreckt sich eine Naht 5, die als verriegelte Steppnaht ausgebildet ist und die Abschnitte 10 des Gassacks 3 miteinander verbindet, so daß eine Falte 6 gebildet wird, durch die die durch das Gewebeteil 7 gebildete Wand verkürzt wird und sich eine konkave Innenseite und eine konvexe Außenseite ergibt. Der in den Fign. 1a und 1b gezeigte Gassack 3 umgibt somit bogenförmig den Kopf- und Thorax-Bereich des Fahrzeuginsassen 1.

Die Naht 5 ist so ausgebildet, daß sie auch im vollständig aufgeblasenen Zustand des Gassackes 3 nicht reißt und entsprechende aneinandergrenzende Abschnitte 1 des Gassackes 3 dauerhaft miteinander verbindet. Die Naht 5 ist gemäß Fig. 1 im Schulterbereich des Fahrzeuginsassen 1 angeordnet, damit die erzeugte Bogenform im Kopfbereich zur Fahrzeugmitte hin zuläuft, um den Abstand des Kopfes des Fahrzeuginsassen 1 vom oberen Teil des Gassackes 3 möglichst gering zu halten.

Während der in den Fign. 1a und 1b gezeigte Gassack mit Naht 5 eine solche Krümmung hat, daß er sich in aufgeblasenem Zustand vollständig im Fahrzeuginneren befindet, erstreckt sich der in den Fign. 2a und 2b gezeigte, aus entsprechenden Gewebeteilen 7, 8 zusammengesetzte Gassack 3 zum gleichen Zeitpunkt t = 30 ms nach einer Kollision aus dem Fahrzeug heraus, da er ohne Naht 5 keine entsprechende geometrische Form aufweist. Der in Fign. 2a und 2b gezeigte Gassack 3 ist damit weder seiner Position im Fahrzeug noch dem Fahrzeuginsassen 1 angepaßt, so daß die Abstände von Körperteilen zum Gassack 3 groß sind, was zu einer hohen Aufprallgeschwindigkeit und hohen Beschleunigungswerten für diese Körperteile führt.

Die in Fign. 1a und 1b gezeigte Ausführungsform des Gassacks 3 kann auch noch modifiziert werden, indem zusätzliche Nähte und entsprechende Falten vorgesehen sind, z.B. vertikale Nähte, die zu einer seitlichen Ummantelung des Fahrzeuginsassen 1 im Kollisionsfall durch den Gassack führen würden, oder eine zusätzliche Naht 11 wie sie in Fig. 1a angedeutet ist, an dem Gewebeteil 7 in Höhe des Kopfbereiches, wodurch sich eine obere Hälfte des Gassacks 3 noch weiter zum Kopf des Fahrzeuginsassen 1 hin krümmen würde. Damit kann der Gassack unterschiedlichste Krümmungen an seiner Oberfläche aufweisen.

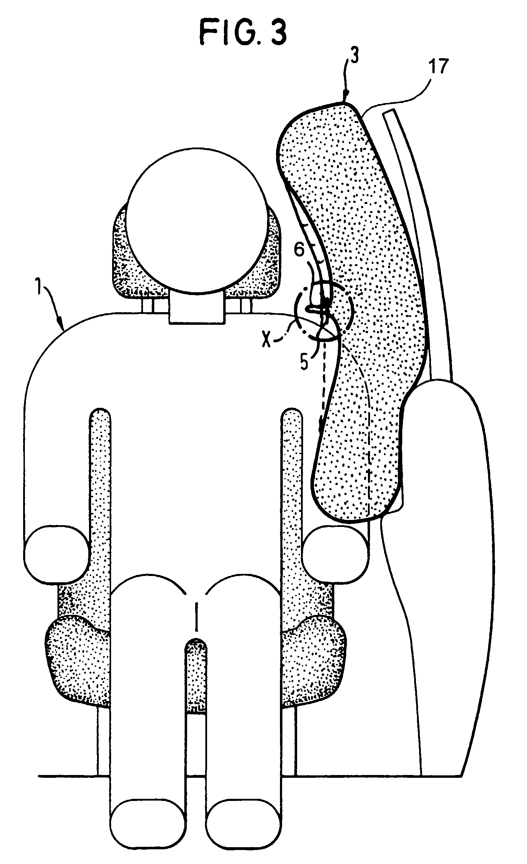

Die in Fig. 3 gezeigte Ausführungsform des Gassacks 3 als Seitenaufprall-Schutzeinrichtung zeigt einen Gassack 3, der aus zwei Seitenteilen und einem Mantelteil 17 besteht. Horizontal erstreckt sich an der Innenseite des Gassackes 3 eine Naht 5, die dem Gassack 3 eine gekrümmte Form verleiht. Auch bei der in Fig. 3 gezeigten Ausführungsform ist die Naht 5 horizontal an der Innenseite des Gassacks 3 in Schulterhöhe des Fahrzeuginsassen 1 angeordnete Eine sich durch die Naht 5 ergebende, nach außen erstreckende Falte 6, die sich in Richtung des Verlaufs der Naht 5 erstreckt und die aus miteinander verbundenen Abschnitten des Gassackes 3 besteht, ist weich und erhöht somit keinesfalls die Verletzungsgefahr.

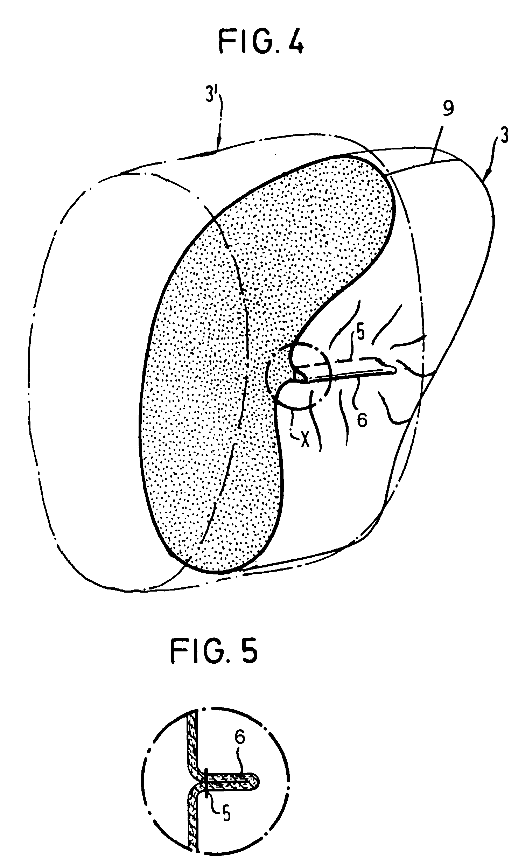

Der in Fig. 4 gezeigte Gassack 3 besteht aus zwei Gewebeteilen 7, 8, die durch eine Umfangsnaht an ihren Umfangsrändern 9 miteinander verbunden sind. Mit strichpunktierten Linien ist dabei ein dem mit durchgezogenen Linien gezeichneten Gassack 3 mit Naht 5 entsprechender Gassack 3' gezeigt, der keine Naht 5 aufweist. Anhand des Gassacks 3' ist gut zu erkennen, daß der in Fig. 3 gezeigte Gassack 3 zwei symmetrische Seitenteile aufweist. Die Naht 5 erstreckt sich an der Innenseite des Gassacks 3 quer zu dieser, jedoch nicht über die gesamte Breite des Gassacks 3, sondern nur über eine Teilbreite in der Mitte des Gassacks 3, so daß sich eine konkave Krümmung der Innenseite des Gassacks 3 sowohl in horizontaler als auch vertikaler Richtung ergibt. Die Naht 5 ist in aufgeblasenem Zustand des Gassacks 3 in etwa in Schulterhöhe des Fahrzeuginsassen 1 angeordnet, so daß durch die durch die Naht 5 entstehende Einbuchtung im Gassack 3, in der die Schulterpartie des Fahrzeuginsassen 1 im Kollisionsfall zu liegen kommt, der Fahrzeuginsasse 1 seitlich, von vorne und von hinten geschützt und ummantelt wird und der Gassack 3 in mehreren Richtungen eine Rückhalte- und Dämpfungsfunktion ausübt.

In Fig. 5 ist deutlich zu erkennen, daß die Naht 5 zwei Abschnitte des Gassacks 3 miteinander verbindet, so daß durch die dann aneinanderliegenden Abschnitte der Fortsatz 4 entsteht.

Durch die Lage der Naht 5 können einem Gassack beliebige Formen gegeben werden, so daß dieser an entfernten Stellen im Fahrzeuginnenraum positioniert sein kann und er zudem einfacher dem Fahrzeuginnenraum und dem vom Fahrzeuginsassen eingenommenen Raum angepaßt werden kann. Der Gassack 3 ist nicht nur auf die Verwendung bei einer Seitenaufprall-Schutzeinrichtung beschränkt, sondern er kann beispielsweise auch entsprechend gestaltet als Frontaufprall-, Thorax-, Knie- oder Beckenschutzeinrichtung für den Fahrzeugfront- und heckinsassen wirken. So ist beispielsweise der in Fig. 4 gezeigte Gassack ebenso als Frontaufprallschutzeinrichtung einsetzbar.

## Patentansprüche

1. Gassack für ein Fahrzeuginsassen-Rückhaltesystem, mit einer flexiblen Wandung, die die Seiten des Gassacks (3) definiert, **dadurch gekennzeichnet,** daß der Gassack (3) in vollständig aufgeblasenem Zustand wenigstens eine Falte (6) aufweist, die durch dauerhaft verbundene, angrenzende Abschnitte (10) der Wandung gebildet ist, und daß wenigstens eine Naht (5) zur Verbindung der Abschnitte (10) vorgesehen ist, die die flexible Wandung auf einer Seite verkürzt und die geometrische Form des Gassacks (3) gegenüber einem entsprechend gestalteten Gassack (3') ohne Naht ändert und daß sich die Falte (6) auf der Außenseite des Gassacks erstreckt.

2. Gassack nach Anspruch 1, **dadurch gekennzeichnet,** daß sich die Naht (5) in Richtung des Verlaufs der Falte (6) erstreckt.

3. Gassack nach Anspruch 1 oder 2, **dadurch gekennzeichnet,** daß die Naht (5) als verriegelte Steppnaht und/oder Kettnaht ausgebildet ist.

4. Gassack nach einem der vorstehenden Ansprüche, **dadurch gekennzeichnet,** daß der Gassack (3) aus zwei Gassackteilen (7, 8) besteht und daß an wenigstens einem Abschnitt (7) wenigstens eine Naht (5) vorgesehen ist, die die Wandung in diesem Abschnitt (7) verkürzt.

5. Gassack nach einem der vorstehenden Ansprüche zur Verwendung bei einer Seitenaufprall-Schutzeinrichtung, **dadurch gekennzeichnet**, daß zumindest eine Naht (5) an einer dem Fahrzeuginnenraum zugewandten Seite des Gassackes (3) so angeordnet ist, daß der Gassack (3), in Fahrzeuglängsrichtung gesehen, eine konkave Innenseite und eine konvexe Außenseite hat und so den Kopf- und Thorax-Bereich eines Fahrzeuginsassen (1) bogenförmig umgibt.

## Claims

1. A gas bag for a vehicle occupant restraint system, comprising a flexible wall defining the sides of the gas bag (3), **characterized in that** the gas bag (3) in its fully inflated condition has at least one fold (6) which is defined by permanently connected adjacent sections (10) of the wall, and that at least one seam (5) for connecting the sections (10) is provided which shortens the flexible wall on one side and changes the geometrical shape of the gas bag (3) as compared with a gas bag (3') of similar configuration but without the seam, and that the fold (6) extends on the outside of the gas bag.

2. The gas bag according to claim 1, **characterized in that** the seam (5) extends in the direction of the run of the fold (6).

3. The gas bag according to claim 1 or 2, **characterized in that** the seam (5) is formed as a quilted stitch seam and/or chain stitch seam.

4. The gas bag according to any of the preceding claims, **characterized in that** the gas bag (3) consists of two gas bag parts (7, 8) and that at least one seam (5) is provided on at least one section (7) which shortens the wall in this section (7).

5. The gas bag according to any of the preceding claims for use in a side impact protection device, **characterized in that** at least one seam (5) is arranged on one side of the gas bag (3) facing the interior of the vehicle, in such a way that the gas bag (3), as viewed in the longitudinal directon of the vehicle, has a concave inside and a convex outside, and in this way extends around the head and thorax areas of a vehicle occupant (1).

## Revendications

1. Coussin gonflable pour un système de retenue d'occupant de véhicule, comprenant une paroi flexible, qui définit les côtés du coussin gonflable (3), caractérisé en ce que le coussin gonflable (3) présente à l'état totalement gonflé au moins un pli (6), qui est formé par des sections (10) contiguës de la paroi, assemblées de façon permanente et en ce qu'au moins une couture (5), qui réduit d'un côté la paroi flexible et modifie la forme géométrique du coussin gonflable (3) par rapport à un coussin gonflable (3') de configuration correspondante sans couture, est prévue pour la jonction des sections (10), et en ce que le pli (6) s'étend sur la face extérieure du coussin gonflable.

2. Coussin gonflable selon la revendication 1, caractérisé en ce que la couture (5) s'étend dans le sens du tracé du pli (6).

3. Coussin gonflable selon la revendication 1 ou 2, caractérisé en ce que la couture (5) est formée par une couture piquée de sécurité et/ou par une couture à points de chaînette.

4. Coussin gonflable selon l'une des revendications précédentes, caractérisé en ce que le coussin gonflable (3) consiste en deux parties (7, 8) de coussin gonflable et en ce que dans au moins une des sections est prévue une couture (5) qui réduit la paroi dans cette section (7).

5. Coussin gonflable selon l'une des revendications précédentes destiné à être utilisé dans un dispositif de protection contre les chocs latéraux, caractérisé en ce qu'au moins une couture (5) est disposée sur un des côtés tourné vers l'habitacle du véhicule de telle sorte que, en vue longitudinale du véhicule, le coussin gonflable (3) a une face intérieure concave et une face extérieure convexe et entoure ainsi la zone de la tête et du thorax d'un occupant (1) de véhicule à la manière d'un arc.
